# FASCICULE DE BREVET EUROPEEN

(11) **EP 0 742 439 B1**
(45) Date de publication et mention de la délivrance du brevet: **30.01.2002**
(21) Numéro de dépôt: 96401022.7
(22) Date de dépôt: 10.05.1996
(51) Int. Cl.: G01P 15/125

(54) **Capteur accélérométrique capacitif miniature**
Kapazitiver Miniaturbeschleunigungsmessaufnehmer
Miniature capacitive acceleration sensor

(30) Priorité: 11.05.1995 FR 9505592
(43) Date de publication de la demande: 13.11.1996
(73) Titulaire: Colibrys S.A., 2007 Neuchâtel (CH)
(72) Inventeur: Bergqvist, Johan Wilhelm, 2014 Bôle (CH); Gobet, Jean, 2006 Neuchâtel (CH)
(74) Mandataire: Caron, Gérard

(56) Documents cités:
- EP-A- 0 491 506
- EP-A- 0 644 427
- DE-A- 3 201 198
- DE-A- 4 426 590
- DE-C- 266 841

## Description

La présente invention est relative à un capteur accélérométrique capacitif miniature, du type qui comprend des première et deuxième électrodes fixes disposées dans des plans sensiblement parallèles et une électrode mobile sensible à l'action de forces d'inertie, cette électrode mobile étant agencée de manière à définir des premier et deuxième condensateurs électriques avec les première et deuxième électrodes, respectivement, et des moyens sensibles à la différence des capacités de ces condensateurs pour en déduire une mesure de l'accélération supportée par l'électrode mobile du capteur.

On connaît un capteur accélérométrique de ce type en particulier du document DE 44 26 590 qui en décrit plusieurs types différents. Un premier type de capteur (figure 7 du document) est monté sur un substrat semi-conducteur. Il comprend une plaque métallique mobile montée au-dessus du substrat par l'intermédiaire d'un piédestal et des barres de torsion qui autorisent une rotation de la plaque autour de son piédestal sous l'effet d'une accélération orientée normalement à la surface de la plaque et du substrat. Ce dernier est constitué par une couche semi-conductrice recouverte d'une couche isolante. La couche semi-conductrice incorpore un circuit intégré d'exploitation des signaux émis par le capteur. Sur la couche isolante sont formées des première et deuxième électrodes fixes, disposées de part et d'autre de l'axe de rotation de la plaque, ou électrode mobile, de manière à constituer des premier et deuxième condensateurs variables de part et d'autre de cet axe. On conçoit que lorsque l'électrode mobile tourne sous l'effet de forces inertielles résultant de l'application d'une accélération, une extrémité de l'électrode mobile se rapproche d'une des électrodes fixes alors que son autre extrémité s'écarte de l'autre électrode fixe. Une mesure différentielle des capacités des deux condensateurs permet d'atteindre la grandeur de l'accélération à mesurer.

S'agissant d'un capteur miniature, il existe toujours un intérêt pour une réduction de l'encombrement d'un tel capteur. Le capteur décrit dans le document précité comprend deux condensateurs disposés côte-à-côte, dont on ne peut réduire l'encombrement sur la surface du substrat qu'en réduisant la surface des électrodes des condensateurs, ce qui réduit du même coup la sensibilité du capteur.

On remarque en outre que des chocs violents sont susceptibles de provoquer une percussion de l'électrode mobile sur le substrat avec risque de briser l'une ou l'autre des barres de torsion et de détruire ainsi le capteur.

Un deuxième type de capteur décrit dans le document DE 44 26 590 (figure 5) comprend un jeu d'électrodes qui sont au moins partiellement superposées les unes aux autres, l'électrode mobile étant en forme de poutre ancrée par une extrémité sur le support fixe.

On sait que la sensibilité d'un tel capteur s'accroît avec celle de la masse de l'électrode mobile. Ainsi, dans le document précité, on prévoit de munir l'électrode mobile d'une masselotte dont on s'efforce de rendre la masse aussi grande que possible.

Dans le premier type de capteur décrit, la masselotte est réalisée en fixant une barrette sur l'un des bords de l'électrode mobile dans le plan de celle-ci. Dans le deuxième type, la masselotte est formée par une couche métallique fixée sur l'une des grandes faces de l'électrode mobile.

Or, ces deux solutions ne sont pas satisfaisantes, car dans les deux cas, la masse de la masselotte est limitée par construction. En effet, dans le premier cas, l'encombrement du capteur (figure 7) sera d'autant plus important que la masse est plus importante. Dans le deuxième cas, la couche métallique étant alors placée entre les armatures de l'un des condensateurs du capteur, on ne peut éviter qu'elle influence le comportement électrique du capteur.

La présente invention a donc pour but de fournir un capteur accélérométrique capacitif ayant globalement une construction selon le deuxième type de capteur décrit ci-dessus, mais dans lequel on peut choisir pour la masselotte une masse comparativement importante sans perturber le comportement électrique du capteur.

L'invention a donc pour objet un capteur accélérométrique tel que défini dans la revendication 1.

Grâce au fait que la masselotte se trouve située en dehors de l'espace de mesure défini par la superposition des trois électrodes, on a toute liberté d'en choisir la taille et de l'adapter à la sensibilité spécifique que l'on veut donner à tel ou tel capteur, sans que l'encombrement du capteur devienne important. L'invention apporte donc une grande souplesse dans la conception et la réalisation d'un capteur accélérométrique.

Suivant un mode de réalisation particulier du capteur selon l'invention, l'électrode mobile présente à son extrémité libre, en dehors de l'espace occupé par les électrodes superposées une partie élargie qui est également occupée par la masselotte.

Suivant une autre caractéristique du capteur selon l'invention, celui-ci comprend une butée fixe pour limiter le débattement de l'électrode mobile, et donc empêcher ainsi une détérioration du capteur.

D'autres caractéristiques et avantages de la présente invention apparaîtront à la lecture de la description qui va suivre et à l'examen du dessin annexé dans lequel:
- les figures 1 et 2 sont des coupes longitudinale et transversale, respectivement, du capteur selon l'invention suivant les traits de coupe I et II, et,
- la figure 3 est une vue en coupe longitudinale d'une variante du capteur des figures 1 et 2.

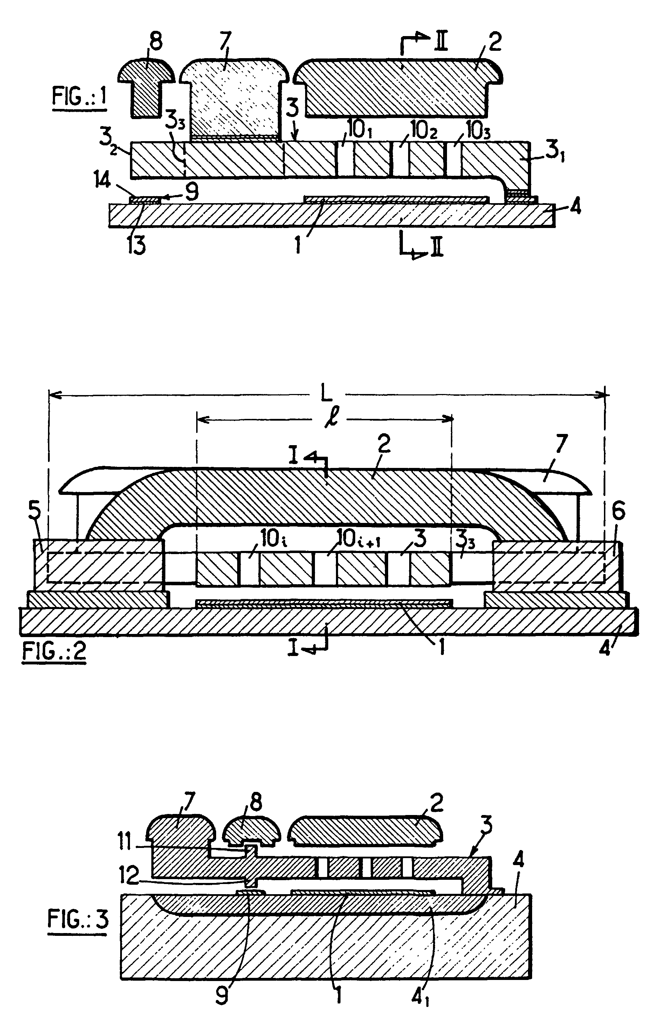

Le capteur accélérométrique suivant l'invention représenté aux figures 1 et 2 est un capteur miniature, d'une surface de quelques mm², porté par un substrat semi-conducteur contenant un circuit intégré assurant l'alimentation électrique du capteur et l'exploitation des signaux électriques délivrés par le capteur. L'échelle des figures 1 et 2, suivant l'épaisseur du capteur, est fortement dilatée pour faire apparaître plus clairement sa constitution. Le capteur comprend ainsi essentiellement des première (1) et deuxième (2) électrodes fixes et une troisième électrode 3 mobile. Ces trois électrodes sont superposées au-dessus du substrat 4, l'électrode mobile 3 passant librement entre les électrodes 1 et 2, les trois électrodes étant généralement parallèles entre elles et au substrat 4.

L'électrode 1 est formée par une ou plusieurs couches métalliques déposées les unes sur les autres au-dessus d'une couche de passivation formée sur le substrat.

L'électrode 2 est également formée par une couche métallique prenant la forme d'une arche (voir figure 2) passant au-dessus de la première électrode 1 et de l'électrode mobile 3, l'arche reposant sur deux ancrages latéraux 5, 6 solidaires du substrat 4.

L'électrode mobile 3 prend la forme d'une poutre ancrée dans le substrat 4 à une extrémité 3₁, l'autre extrémité 3₂ de la poutre étant libre. La poutre 3 supporte au voisinage de cette extrémité libre 3₂ une masselotte 7 propre à accroître son moment d'inertie autour d'un axe passant par son ancrage 3₁.

Une butée 8 limite, avec le substrat 4 lui-même, le débattement de la poutre 3 autour de sa position de repos. La butée 8 forme elle aussi une arche au-dessus de l'extrémité de la poutre, cette arche reposant sur des ancrages (non représentés) semblables aux ancrages 5, 6 de l'électrode 2.

Un tel capteur est propre à détecter des accélérations se développant suivant un axe perpendiculaire au plan du substrat 4. L'électrode se comporte vis-à-vis de telles accélérations comme une lame vibrante grâce à son inertie, amplifiée par la masselotte 7. En vibrant l'électrode 3 fait varier en sens inverses les capacités des condensateurs constitués par les électrodes 1, 3 d'une part, 2, 3 d'autre part. Une détection différentielle classique de ces variations de capacités, assurée par un circuit électronique conçu à cet effet, intégré dans le substrat au droit du capteur et connecté aux trois électrodes 1, 2 et 3 par trois liaisons électriques (non représentées), permet de remonter à l'amplitude de l'accélération à l'origine de ces vibrations.

Grâce à la superposition des deux condensateurs 1, 3 et 2, 3 , la surface occupée par le capteur sur le substrat est avantageusement réduite sensiblement par rapport à celle occupée par les deux condensateurs disposés côte-à-côte dans le capteur du document précité (figure 7).

Malgré la surface réduite du capteur, l'inertie de l'électrode mobile 3 peut être fortement accrue par la masselotte 7 qui peut, suivant l'invention, s'étendre transversalement et longitudinalement sur l'électrode mobile 3, sur une surface dont on peut à la fabrication régler à volonté l'étendue. C'est ainsi que cette masselotte peut être portée par une partie élargie 3₃ de largeur L, de l'électrode 3, présentant ailleurs une largeur 1 (voir figure 2). Par ce moyen on peut former sur l'électrode 3 une masselotte 7 d'une masse donnée, propre à conférer au capteur une sensibilité prédéterminée convenant à telle ou telle application.

Un autre moyen d'action sur cette sensibilité consiste à agir sur la raideur de l'électrode mobile et sur son ancrage 3₁ sur le substrat, en choisissant convenablement les dimensions, et notamment l'épaisseur de l'électrode, ainsi que la géométrie de l'ancrage 3₁, géométrie que l'on peut modifier sensiblement par des perforations ou des découpes sélectivement disposées.

L'amortissement des vibrations de l'électrode mobile doit être contrôlé pour établir une bande passante la plus large et la plus plate possible. Suivant l'invention, on assure l'amortissement des vibrations de l'électrode 3 en ménageant des ouvertures 10ᵢ régulièrement disposées à travers l'électrode 3, ces ouvertures permettant à un fluide gazeux environnant cette électrode de passer d'un côté vers l'autre de celle-ci. Le capteur étant encapsulé on peut choisir le gaz enfermé dans la capsule et les dimensions des ouvertures 10ᵢ pour assurer tel ou tel amortissement, par frottement visqueux du gaz contre l'électrode 3 dans les ouvertures 10ᵢ. Incidemment, on notera qu'en agissant sur le diamètre des ouvertures 10ᵢ, on dispose d'un autre moyen de réglage de la raideur, évoquée ci-dessus, de l'électrode mobile.

La butée 8 sert à empêcher qu'un choc violent ne brise l'ancrage 3₁ de l'électrode 3. Le substrat 4 joue le même rôle à l'autre borne de la course de l'extrémité libre 3₂ de l'électrode 3. En cas de contact entre la butée 8 et l'électrode 3 à la suite d'un tel choc, le potentiel électrique de la butée 8 risque de perturber celui de l'électrode s'ils sont différents, voire de provoquer un collage de cette électrode sur cette butée. Suivant l'invention, on peut prévenir ces perturbations en établissant une liaison électrique permanente entre la butée 8 et l'électrode 3, grâce à une ligne conductrice (non représentée) tracée sur le substrat 4. Cette ligne passe avantageusement par un contact 9 formé au point d'impact éventuel de l'électrode 3 sur le substrat, pour les mêmes raisons.

Suivant une autre variante avantageuse de l'invention, le contact 9 et la butée 8, tout en étant isolés de l'électrode mobile 3, peuvent être connectés par l'intermédiaire de ladite ligne conductrice à un dispositif de commande (non représenté) susceptible de déclencher une action d'urgence, par exemple. En effet, lorsque l'électrode mobile 3, par suite d'un choc violent, vient heurter soit la butée 8, soit le contact 9, elle pourra provoquer la production d'un signal faisant agir ledit dispositif de commande. Si le capteur est incorporé dans un véhicule automobile, ce dernier peut alors déclencher par exemple le déploiement d'un sac gonflable de protection des occupants du véhicule, ou toute autre action d'urgence.

On a représenté à la figure 3, en coupe longitudinale, une variante du capteur des figures 1 et 2, des références numériques identiques repérant des éléments ou organes identiques ou similaires sur toutes ces figures. A la figure 3 les positions longitudinales de la masse 7 et de la butée 8 sont inversées par rapport à celles observées sur la figure 1. La butée 8 et le contact 9 coopèrent avec des excroissances 11 et 12, respectivement, débordant de l'électrode 3 pour limiter le débattement de cette électrode sous de fortes accélérations. Incidemment, on a représenté à la figure 3 le caisson 4₁ qui contient dans le substrat semi-conducteur 4, le circuit intégré associé au capteur.

Le capteur accélérométrique suivant l'invention peut être réalisé par des techniques photolithographiques de dépôt de couches métalliques par électrodéposition, pour constituer les électrodes, et de dépôt de couches sacrificielles entre les couches métalliques, ces dépôts étant opérés sur un substrat semi-conducteur isolé par une couche de passivation et comportant le circuit électronique assurant l'alimentation électrique des électrodes et le traitement des signaux délivrés par le capteur, à savoir les tensions aux bornes des deux condensateurs (1, 3) et (2, 3).

C'est ainsi que, en référence à la figure 1, on peut former tout d'abord par pulvérisation sous vide une couche 13 de TiW-Au, puis une couche 14 de nickel et une autre couche d'or par dépôt électrolytique, à travers un masque en résine délimitant l'électrode 1 et le contact 9. Une couche sacrificielle constituée d'une résine photosensible par exemple, est ensuite déposée, exposée et dépouillée puis recouverte d'un plaquage d'or obtenu par vaporisation, surmonté d'un plaquage électrolytique de nickel par exemple pour constituer l'électrode mobile 3. Par des opérations analogues on constitue l'électrode 2, la masselotte 7 et la butée 8. Les couches sacrificielles sont enfin éliminées.

Par le procédé de fabrication décrit ci-dessus, il est possible de former simultanément plusieurs capteurs sur un même substrat, ceux-ci pouvant présenter des performances différentes en matière de sensibilité, de bande passante ou d'amortissement des vibrations de l'électrode mobile. Ce procédé permet en effet d'agir facilement sur la masse de la masselotte, sur la raideur de l'électrode mobile, sur les dimensions des électrodes et donc sur les capacités des condensateurs, etc, etc....

La souplesse de conception qu'offre ce procédé de fabrication permet d'adapter facilement une structure de base du capteur à des spécifications particulières en matière de sensibilité, de bande passante, etc..., qui peuvent varier d'un client à l'autre du fabricant d'un tel capteur.

La très grande miniaturisation du capteur suivant l'invention et la simplicité de son procédé de fabrication ont pour autre effet bénéfique d'abaisser le coût de fabrication du capteur tout en lui conservant de très bonnes performances.

## Revendications

1. Capteur accélérométrique capacitif, du type qui comprend
- des première (1) et deuxième (2) électrodes fixes disposées dans des plans sensiblement parallèles
- une électrode mobile (3) sensible à l'action de forces d'inertie, cette électrode étant agencée de manière à définir des premier (1,3) et deuxième (2,3) condensateurs électriques avec les première (1) et deuxième (2) électrodes respectivement, les première (1) et deuxième (2) électrodes étant superposées et disposées de part et d'autre de l'électrode mobile (3), le capteur comprenant également une masselotte (7) fixée sur l'électrode mobile qui prend la forme d'une poutre ancrée par une extrémité (3₁) sur un support fixe (4) solidaire des première (1) et deuxième (2) électrodes et
- des moyens sensibles à la différence des capacités desdits condensateurs pour en déduire une mesure de l'accélération supportée par l'électrode mobile (3) du capteur,
- **caractérisé en ce que** ladite masselotte (7) est prévue au voisinage de l'extrémité libre (3₂) de ladite poutre (3) en dehors de l'espace occupé par lesdites première (1) et deuxième (2) électrodes fixes.

2. Capteur conforme à la revendication 1, **caractérisé en ce** l'électrode mobile (3) présente à son extrémité libre en dehors dudit espace occupé par lesdites première (1) et deuxième (2) électrodes, une partie élargie (3₃) et en ce que ladite masselotte (7) repose également sur ladite partie élargie (3₃) de l'électrode mobile (3).

3. Capteur conforme à l'une quelconque des revendications 1 et 2, **caractérisé en ce qu'**il comprend au moins une butée fixe (8,9) pour limiter le débattement de l'électrode mobile (3).

4. Capteur conforme à la revendication 3, **caractérisé en ce que** ladite butée (8, 9) est métallique et **en ce qu'**une liaison électrique connecte en permanence l'électrode mobile et cette butée (8).

5. Capteur conforme à la revendication 3, **caractérisé en ce que** ladite butée (8, 9) est métallique et **en ce qu'**une liaison électrique connecte ladite butée (8, 9) à un dispositif de commande susceptible de déclencher une action d'urgence dans au moins une position extrême de ladite électrode mobile (3).

6. Capteur conforme à l'une quelconque des revendications 3 à 5, **caractérisé en ce que** l'électrode mobile (3) porte au moins une excroissance (11) qui coopère avec la butée (8, 9) pour définir le débattement maximal de ladite électrode (3).

7. Capteur conforme à l'une quelconque des revendications 1 à 6, **caractérisé en ce que**, au droit des première (1) et deuxième(2) électrodes, l'électrode mobile (3) est percée d'ouvertures (10ᵢ) de passage d'un gaz, de manière à assurer un amortissement visqueux de ses vibrations.

8. Capteur conforme à l'une quelconque des revendications 1 à 7, **caractérisé en ce qu'**il comprend des moyens pour régler la raideur de l'ancrage de l'électrode mobile à une valeur prédéterminée.

9. Capteur conforme à l'une quelconque des revendications 1 à 8, **caractérisé en ce que** les moyens sensibles à la différence des capacités des premier et deuxième condensateurs prennent la forme d'un circuit électronique intégré dans un substrat semi-conducteur (4), ce substrat portant les première (1) et deuxième (2) électrodes ainsi que l'électrode mobile (3) au droit du circuit intégré, qui est électriquement relié à chacune de ces trois électrodes.

10. Ensemble de plusieurs capteurs miniatures conforme à la revendication 9, portés par un même substrat (4), **caractérisé en ce que** les électrodes desdits capteurs sont dimensionnées de manière à présenter, pour au moins une des grandeurs caractéristiques du groupe formé par: la sensibilité, la bande passante, l'amortissement, des valeurs prédéterminées.

11. Procédé de fabrication d'un capteur suivant l'une quelconque des revendications 3 à 9, **caractérisé en ce qu'**il consiste à:
- former sur un substrat semi-conducteur (4) ladite première électrode fixe (1);
- déposer sur ledit substrat et sur ladite électrode fixe une première couche sacrificielle tout en y aménageant un ancrage;
- former sur ladite première couche sacrificielle ladite électrode mobile (3) en l'attachant audit ancrage;
- recouvrir ladite électrode mobile (3) et le reste de ladite première couche sacrificielle d'une seconde couche sacrificielle;
- former simultanément sur ladite couche sacrificielle ladite masselotte (7), ladite butée (8) et ladite seconde électrode fixe (2); et
- éliminer lesdites première et seconde couche sacrificielles.

12. Procédé suivant la revendication 11, **caractérisé en ce que** les électrodes (1, 2, 3), ladite masselotte (7) et ladite butée (8) sont formées par des opérations d'électrodéposition.

## Patentansprüche

1. Kapazitiver Beschleunigungsaufnehmer eines Typs, der aufweist:
- eine erste (1) und eine zweite (2) festgelegte Elektrode, die in im wesentlichen parallelen Ebenen angeordnet sind,
- eine bewegliche Elektrode (3), die auf die Wirkung von Trägheitskräften anspricht, wobei diese Elektrode so ausgebildet ist, dass sie mit der ersten (1) bzw. zweiten (2) Elektrode einen ersten (1, 3) und einen zweiten (2, 3) elektrischen Kondensator bildet, die erste (1) und zweite (2) Elektrode übereinanderliegen und beidseitig zu der beweglichen Elektrode (3) angeordnet sind, der Aufnehmer ferner ein Gewicht (7) aufweist, das auf der beweglichen Elektrode festgelegt ist, welche die Form eines Tragbalkens hat, der mit einem Ende (3₁) an einer mit der ersten (1) und zweiten (2) Elektrode fest verbundenen festgelegten Abstützung (4) verankert ist, und
- Mittel, die auf den Unterschied der Kapazitäten der Kondensatoren ansprechen, um hiervon ein Maß der Beschleunigung abzuleiten, das von der beweglichen Elektrode (3) des Aufnehmers getragen wird,
- **dadurch gekennzeichnet, dass** das Gewicht (7) in der Nähe des freien Endes (3₂) des Tragbalkens (3) außerhalb des von der ersten (1) und zweiten (2) festgelegten Elektrode eingenommenen Raumes vorgesehen ist.

2. Aufnehmer nach Anspruch 1, **dadurch gekennzeichnet, dass** die bewegliche Elektrode (3) an ihrem freien Ende außerhalb des von der ersten (1) und zweiten (2) Elektrode eingenommenen Raumes einen verbreiterten Abschnitt (3₃) hat und dass das Gewicht (7) ferner auf dem verbreiterten Abschnitt (3₃) der beweglichen Elektrode (3) ruht.

3. Aufnehmer nach einem der Ansprüche 1 und 2, **dadurch gekennzeichnet, dass** er mindestens einen festgelegten Anschlag (8, 9) hat, um den Ausschlag der beweglichen Elektrode (3) zu begrenzen.

4. Aufnehmer nach Anspruch 3, **dadurch gekennzeichnet, dass** der Anschlag (8, 9) metallisch ist und dass eine elektrische Verbindung die bewegliche Elektrode und diesen Anschlag (8) dauerhaft verbindet.

5. Aufnehmer nach Anspruch 3, **dadurch gekennzeichnet, dass** der Anschlag (8, 9) metallisch ist und dass eine elektrische Verbindung den Anschlag (8, 9) mit einer Steuervorrichtung verbindet, die in der Lage ist, eine Sofortmaßnahme in mindestens einer Endstellung der beweglichen Elektrode (3) auszulösen.

6. Aufnehmer nach einem der Ansprüche 3 bis 5, **dadurch gekennzeichnet, dass** die bewegliche Elektrode (3) mindestens einen Vorsprung (11) trägt, der mit dem Anschlag (8, 9) zusammenwirkt, um den maximalen Ausschlag der Elektrode (3) zu definieren.

7. Aufnehmer nach einem der Ansprüche 1 bis 6, **dadurch gekennzeichnet, dass** an der Stelle der ersten (1) und zweiten (2) Elektrode die bewegliche Elektrode (3) mit Gasdurchströmöffnungen (10ᵢ) versehen ist, um eine viskose Dämpfung ihrer Schwingungen sicherzustellen.

8. Aufnehmer nach einem der Ansprüche 1 bis 7, **dadurch gekennzeichnet, dass** er Mittel zum Regeln der Steifigkeit der Verankerung der beweglichen Elektrode auf einen vorgegebenen Wert aufweist.

9. Aufnehmer nach einem der Ansprüche 1 bis 8, **dadurch gekennzeichnet, dass** die auf den Unterschied der Kapazitäten des ersten und zweiten Kondensators ansprechenden Mittel die Form einer elektronischen Schaltung haben, die in einem Halbleitersubstrat (4) integriert sind, wobei dieses Substrat die erste (1) und zweite (2) Elektrode sowie die bewegliche Elektrode (3) an der Stelle der integrierten Schaltung trägt, welche mit jeder der drei Elektroden elektrisch verbunden ist.

10. Anordnung aus mehreren miniaturisierten Aufnehmern nach Anspruch 9, die von demselben Substrat (4) getragen werden, **dadurch gekennzeichnet, dass** die Elektroden der Aufnehmer so dimensioniert sind, dass sie für mindestens eine der charakteristischen Größen einer von der Ansprechempfindlichkeit, dem Durchlassband und der Dämpfung gebildeten Gruppe vorgegebene Werte aufweisen.

11. Verfahren zum Herstellen eines Aufnehmers nach einem der Ansprüche 3 bis 9, **dadurch gekennzeichnet, dass** es aus den folgenden Schritten besteht:
- Bilden der ersten festgelegten Elektrode (1) auf einem Halbleitersubstrat (4);
- Auftragen einer ersten Opferschicht auf dem Substrat und auf der festgelegten Elektrode, wobei hierbei eine Verankerung vorgesehen wird;
- Bilden der beweglichen Elektrode (3) auf der ersten Opferschicht durch Befestigen derselben an der Verankerung;
- Bedecken der beweglichen Elektrode (3) und des Restes der ersten Opferschicht mit einer zweiten Opferschicht;
- gleichzeitiges Bilden des Gewichtes (7), des Anschlages (8) und der zweiten festliegenden Elektrode (2) auf der Opferschicht; und
- Entfernen der ersten und zweiten Opferschicht.

12. Verfahren nach Anspruch 11, **dadurch gekennzeichnet, dass** die Elektroden (1, 2, 3), das Gewicht (7) und der Anschlag (8) durch Elektroabscheidevorgänge gebildet werden.

## Claims

1. A capacitive accelerometer sensor of the type which includes:
- a fixed first electrode (1) and a fixed second electrode (2) disposed in substantially parallel planes,
- a mobile electrode (3) which is sensitive to inertia forces, said electrode being adapted to define a first electrical capacitor (1, 3) and a second electrical capacitor (2, 3) with the first electrode (1) and the second electrode (2), respectively, the first electrode (1) and the second electrode (2) being superposed and disposed one on each side of the mobile electrode (3), the sensor also including a weight (7) fixed to the mobile electrode that takes the form of a beam anchored at one end (3₁) to a fixed support (4) fastened to the first electrode (1) and the second electrode (2), and
- means sensitive to the difference between the capacitances of said capacitors to deduce therefrom a measured value of the acceleration of the mobile electrode (3) of the sensor,
- **characterised in that** said weight (7) is in the vicinity of the free end (3₂) of said beam (3) outside the space occupied by said fixed first electrode (1) and said fixed second electrode (2).

2. The sensor according to claim 1, **characterised in that** the mobile electrode (3) has an enlarged part (3₃) at its free end outside said space occupied by said first electrode (1) and said second electrode (2) and **in that** said weight (7) also rests on said enlarged part (3₃) of the mobile electrode (3).

3. A sensor according to either claim 1 or claim 2, **characterised in that** it includes at least one fixed abutment (8, 9) for limiting the travel of the mobile electrode (3).

4. A sensor according to claim 3, **characterised in that** said abutment (8, 9) is made of metal and **in that** an electrical connection permanently connects the mobile electrode and said abutment (8).

5. A sensor according to claim 3, **characterised in that** said abutment (8, 9) is made of metal and **in that** an electrical connection connects said abutment (8, 9) to a control device adapted to trigger an emergency action in at least one extreme position of said mobile electrode (3).

6. A sensor according to any of claims 3 to 5, **characterised in that** the mobile electrode (3) carries at least one excrescence (11) which cooperates with the abutment (8, 9) to define the maximum travel of said electrode (3).

7. A sensor according to any of claims 1 to 6, **characterised in that** the mobile electrode (3) has openings (10ᵢ) in it, in line with the first electrode (1) and the second electrode (2), for a gas to pass through to provide viscous damping of its vibration.

8. A sensor according to any of claims 1 to 7, **characterised in that** it includes means for adjusting the stiffness of the anchorage of the mobile electrode to a predetermined value.

9. A sensor according to any of claims 1 to 8, **characterised in that** the means sensitive to the difference between the capacitances of the first and second capacitors take the form of an integrated circuit integrated into a semiconductor substrate (4) carrying the first electrode (1) and the second electrode (2) as well as the mobile electrode (3) in line with the integrated circuit, which is electrically connected to each of the three electrodes.

10. A plurality of miniature sensors according to claim 9, carried by the same substrate (4), **characterised in that** the electrodes of said sensors are dimensioned to have predetermined values for at least one of the magnitudes characteristic of the group formed by: sensitivity, bandwidth, damping.

11. A method of fabricating a sensor according to any of claims 3 to 9, **characterised in that** it consists of:
- forming said first fixed electrode (1) on a semiconductor substrate (4);
- depositing a first sacrificial layer on said substrate and on said fixed electrode at the same time as forming an anchorage;
- forming said mobile electrode (3) on said first sacrificial layer and attaching it to said anchorage;
- covering said mobile electrode (3) and the remainder of said first sacrificial layer with a second sacrificial layer;
- simultaneously forming on said sacrificial layer said weight (7), said abutment (8) and said second fixed electrode (2); and
- eliminating said first and second sacrificial layers.

12. A method according to claim 11, **characterised in that** the electrodes (1, 2, 3), said weight (7) and said abutment (8) are formed by electrodeposition.
